# EUROPEAN PATENT APPLICATION

(11) **EP 3 606 208 A1**
(43) Date of publication of application: **05.02.2020**
(21) Application number: 18772613.8
(22) Date of filing: 22.03.2018
(51) Int. Cl.: H04W 72/02, H04W 72/04

(54) **RESOURCE SELECTION METHOD AND APPARATUS, RESOURCE ALLOCATION METHOD AND APPARATUS, AND RELATED STORAGE MEDIUM**

(30) Priority: 24.03.2017 CN 201710184775
(71) Applicant: ZTE Corporation, Shenzhen, Guangdong 518057 (CN)
(72) Inventor: LU, Youxiong, Shenzhen Guangdong 518057 (CN); HUANG, Shuanghong, Shenzhen Guangdong 518057 (CN); YANG, Jin, Shenzhen Guangdong 518057 (CN); CHEN, Jie, Shenzhen Guangdong 518057 (CN)
(74) Representative: J A Kemp LLP
(86) International application number: PCT/CN2018/079977
(87) International publication number: WO 2018/171664

(57) **Abstract**

Disclosed are a resource selection method and apparatus. The method includes:
pre-configuring or receiving, from a base station, configuration information of a first transmission resource pool and a second transmission resource pool; or pre-configuring or receiving, from the base station, configuration information of a third transmission resource pool including a first transmission resource area and a second transmission resource area; and when the first transmission resource pool or the first transmission resource area satisfies a preset resource selection condition, selecting a resource from the first transmission resource pool or the first transmission resource area for a transmission, otherwise selecting a resource from the second transmission resource pool or the second transmission resource area for the transmission. Further disclosed are a resource configuration method and apparatus, and a related computer storage medium.

## Description

### CROSS-REFERENCES TO RELATED APPLICATIONS

This application claims priority to a Chinese patent application No. 201710184775.2 filed on March 24, 2017, disclosure of which is incorporated herein by reference in its entirety.

### TECHNICAL FIELD

The present invention relates to the field of wireless communications and, in particular, to a resource selection method and apparatus, a resource configuration method and apparatus and a related computer storage medium.

### BACKGROUND

In recent years, short range communication, such as device-to-device (D2D) communication and vehicle-to-everything (V2X) communication, has received increasingly more attention and research. Short range communication may be applied to public safety, the V2X, on-site command, social networks, electronic payment, local advertising, gaming and entertainment and the like.

D2D technology may be employed in a scenario with network coverage, a scenario with partial network coverage, a scenario without network coverage, and the like. D2D technology allows multiple user equipments supporting a D2D function (D2D user equipment (D2D UE)) to perform a direct discovery or direct communications. D2D technology may reduce the burden of a cellular network, reduce the battery power consumption of the UEs, increase a data rate, and improve the robustness of network infrastructure, and thus satisfies the requirements for high data rate traffic and proximity services. Moreover, the D2D technology supports the direct communications without network coverage and may satisfy special communication requirements of the public safety.

V2X communications employ advanced wireless communication technologies to implement real-time information interactions between vehicles, between vehicles and roadside infrastructure, and between vehicles and pedestrians, exchange their current status (including the position, speed, acceleration and traveling path of the vehicle) and the road environment information, cooperatively acquire road hazard conditions, and provide various collision warning information in time to prevent road traffic accidents. V2X communications may be specifically classified into the following modes: vehicle-to-vehicle (V2V) communication, vehicle-to-pedestrian (V2P) communications, vehicle-to-infrastructure (V2I) communications and vehicle-to-network (V2N) communications. The above V2X communications modes may also be collectively referred to as the vehicle-to-everything (V2X) communications.

D2D communications, V2X communications, or direct communications between other devices generally support two communication modes: communications based on base station scheduling (referred to as a mode 1), and communications based on UE's autonomous resource selection (referred to as a mode 2). To support low-latency traffic, the transmitter UE needs to transmit data through an air interface as soon as possible. In the mode 2, the transmitter UE needs to select available time-frequency resources that satisfy low-latency requirements.

### SUMMARY

To solve the preceding problem, embodiments of the present invention provide a resource selection method and apparatus, a resource configuration method and apparatus and a computer storage medium, to achieve reliable transmissions of low-latency traffic.

An embodiment of the present invention provides a resource selection method. The method includes:
pre-configuring or receiving, from a base station, configuration information of a first transmission resource pool and a second transmission resource pool; or pre-configuring or receiving, from the base station, configuration information of a third transmission resource pool including a first transmission resource area and a second transmission resource area; and
when the first transmission resource pool or the first transmission resource area satisfies a preset resource selection condition, selecting a resource from the first transmission resource pool or the first transmission resource area for a transmission, otherwise selecting a resource from the second transmission resource pool or the second transmission resource area for the transmission.

In an alternative embodiment of the present invention, that the first transmission resource pool or the first transmission resource area satisfies the preset resource selection condition refers to that a number of available resources in the first transmission resource pool or the first transmission resource area is greater than, or is greater than or equal to an available resource number threshold, or a proportion of the available resources in the first transmission resource pool or the first transmission resource area is greater than, or is greater than or equal to an available resource proportion threshold.

In an alternative embodiment of the present invention, the available resources are resources in the first transmission resource pool or the first transmission resource area, each of which is unoccupied or predicted to be unoccupied according to the resource sensing, satisfies a latency requirement and has energy less than, or less than or equal to an energy decision threshold within a certain time domain range.

In an alternative embodiment of the present invention, the energy decision threshold includes one energy decision threshold value or a plurality of energy decision threshold values corresponding to ProSe per packet priorities or channel busy ratios.

In an alternative embodiment of the present invention, the method further includes: pre-configuring the available resource number threshold or available resource proportion threshold; acquiring the available resource number threshold or available resource proportion threshold from the base station; or determining the available resource number threshold or available resource proportion threshold according to a minimum number of resources required by a user equipment; and acquiring, from the base station, the energy decision threshold.

In an alternative embodiment of the present invention, the first transmission resource pool, the second transmission resource pool, and the third transmission resource pool including the first transmission resource area and the second transmission resource area are located on a same carrier or on different carriers.

An embodiment of the present invention provides a resource selection apparatus. The apparatus includes a first configuration module, a determining module, a selection module and a first transmission module.

The first configuration module is configured to pre-configure or receive, from a base station, configuration information of a first transmission resource pool and a second transmission resource pool; or pre-configure or receive, from the base station, configuration information of a third transmission resource pool including a first transmission resource area and a second transmission resource area.

The determining module is configured to determine whether the first transmission resource pool or the first transmission resource area satisfies a preset resource selection condition.

The selection module is configured to: when the determining module determines that the first transmission resource pool or the first transmission resource area satisfies the preset resource selection condition, select a resource from the first transmission resource pool or the first transmission resource area, otherwise select a resource from the second transmission resource pool or the second transmission resource area.

The first transmission module is configured to transmit a signal by using the resource selected by the selection module.

In an alternative embodiment of the present invention, the determining module is further configured to determine whether the first transmission resource pool or the first transmission resource area satisfies the preset resource selection condition in the following manner: determining that the first transmission resource pool or the first transmission resource area satisfies the preset resource selection condition when a number or proportion of available resources in the first transmission resource pool or the first transmission resource area is greater than, or is greater than or equal to an available resource number threshold or available resource proportion threshold.

In an alternative embodiment of the present invention, the resource selection apparatus further includes a sensing module, which is configured to sense resources in the first transmission resource pool or the first transmission resource area and determine the available resources; where the available resources are resources in the first transmission resource pool or the first transmission resource area, each of which is unoccupied or predicted to be unoccupied according to the resource sensing, satisfies a latency requirement, and has energy less than, or less than or equal to an energy decision threshold.

In an alternative embodiment of the present invention, the energy decision threshold includes one energy decision threshold value or a plurality of energy decision threshold values corresponding to ProSe per packet priorities or channel busy ratios.

In an alternative embodiment of the present invention, the first configuration module is further configured to: acquire the available resource number threshold or available resource proportion threshold from the base station, pre-configure the available resource number threshold or available resource proportion threshold, or determine the available resource number threshold or available resource proportion threshold according to a minimum number of resources required by a user equipment; and acquire, from the base station, the energy decision threshold.

An embodiment of the present invention provides a resource selection apparatus, including a memory and a processor, where the memory stores a program which, when read and executed by the processor, causes the processor to:
pre-configure or receive, from a base station, configuration information of a first transmission resource pool and a second transmission resource pool; or pre-configure or receive, from the base station, configuration information of a third transmission resource pool including a first transmission resource area and a second transmission resource area; and
when the first transmission resource pool or the first transmission resource area satisfies a preset resource selection condition, select a resource from the first transmission resource pool or the first transmission resource area for a transmission, otherwise select a resource from the second transmission resource pool or the second transmission resource area for the transmission.

In an alternative embodiment of the present invention, that the first transmission resource pool or the first transmission resource area satisfies the preset resource selection condition refers to that a number or proportion of available resources in the first transmission resource pool or the first transmission resource area is greater than, or is greater than or equal to an available resource number threshold or available resource proportion threshold.

In an alternative embodiment of the present invention, the available resources are resources in the first transmission resource pool or the first transmission resource area, each of which is unoccupied or predicted to be unoccupied according to the resource sensing, satisfies a latency requirement, and has energy less than, or less than or equal to an energy decision threshold within a certain time domain range.

In an alternative embodiment of the present invention, the energy decision threshold comprises one energy decision threshold value or a plurality of energy decision threshold values corresponding to ProSe per packet priorities or channel busy ratios.

In an alternative embodiment of the present invention, the program, when read and executed by the processor, further causes the processor to: acquire the available resource number threshold or available resource proportion threshold from the base station, pre-configure the available resource number threshold or available resource proportion threshold, or determine the available resource number threshold or available resource proportion threshold according to a minimum number of resources required by a user equipment; and acquire, from the base station, the energy decision threshold.

An embodiment of the present invention provides a resource configuration method. The method includes:
determining a first transmission resource pool and a second transmission resource pool; or determining a third transmission resource pool, where the third transmission resource pool includes a first transmission resource area and a second transmission resource area; and
transmitting configuration information of the first transmission resource pool and the second transmission resource pool or configuration information of the third transmission resource pool to a user equipment.

In an alternative embodiment of the present invention, the method further includes: transmitting at least one of an available resource number threshold, or an available resource proportion threshold, or an energy decision threshold to the user equipment.

An embodiment of the present invention provides a resource configuration apparatus. The apparatus includes a second determining module and a second transmission module.

The second determining module is configured to determine a first transmission resource pool and a second transmission resource pool; or determine a third transmission resource pool, where the third transmission resource pool includes a first transmission resource area and a second transmission resource area.

The second transmission module is configured to transmit configuration information of the first transmission resource pool and the second transmission resource pool or configuration information of the third transmission resource pool to a user equipment.

In the preceding solution, the second determining module is further configured to determine at least one of: an available resource number threshold, an available resource proportion threshold, or an energy decision threshold.

The second transmission module is further configured to transmit at least one of: the available resource number threshold, the available resource proportion threshold, or the energy decision threshold to the user equipment.

An embodiment of the present invention provides a resource configuration apparatus, including a memory and a processor, where the memory stores a program which, when read and executed by the processor, causes the processor to:
determine a first transmission resource pool and a second transmission resource pool; or determine a third transmission resource pool, where the third transmission resource pool includes a first transmission resource area and a second transmission resource area; and
transmit configuration information of the first transmission resource pool and the second transmission resource pool or configuration information of the third transmission resource pool to a user equipment.

In an alternative embodiment of the present invention, the program, when read and executed by the processor, further causes the processor to: transmit at least one of: an available resource number threshold, an available resource proportion threshold, or an energy decision threshold to the user equipment.

An embodiment of the present invention further provides a computer storage medium, which is configured to store a program which, when executed, is used for executing the resource selection method described above.

An embodiment of the present invention further provides a computer storage medium, which is configured to store a program which, when executed, is used for executing the resource configuration method described above.

The solutions provided by the embodiments of the present invention solve the problem that in order to support the low-latency traffic, the UE cannot select an available resource that satisfies a requirement within a short resource selection window. When an available resource that satisfies a latency requirement cannot be selected from the first transmission resource pool or the first transmission resource area, the second transmission resource pool or the second transmission resource area may be pre-configured or configured and the available resource may be selected from the second transmission resource pool or the second transmission resource area, thereby improving resource selection freedom and ensuring the reliable transmissions of the low-latency traffic.

Additional features and advantages of the preset invention will be set forth in the description which follows, and in part will be apparent from the description, or may be understood by implementing the present invention. The objects and other advantages of the present invention can be achieved and obtained through the structures especially indicated in the description, claims and drawings.

### BRIEF DESCRIPTION OF DRAWINGS

The drawings are used to provide a further understanding of the technical solutions of the present invention, constitute a part of the description, explain the technical solutions of the present invention in conjunction with the embodiments of the present application, and do not limit the technical solutions of the present invention.
FIG. 1 is a flowchart of a resource selection method according to an embodiment of the present invention;
FIG. 2 is a schematic diagram of a resource pool configuration scheme 1 according to an embodiment of the present invention;
FIG. 3 is a schematic diagram of a resource pool configuration scheme 2 according to an embodiment of the present invention;
FIG. 4 is a flowchart of a resource selection method according to an embodiment 1 of the present invention;
FIG. 5 is a flowchart of a resource selection method according to an embodiment 2 of the present invention;
FIG. 6 is a flowchart of a resource selection apparatus according to an embodiment 4 of the present invention;
FIG. 7 is a block diagram of a resource selection apparatus according to an embodiment 6 of the present invention; and
FIG. 8 is a flowchart of a resource selection method according to an embodiment 3 of the present invention.

### DETAILED DESCRIPTION

Objects, technical solutions and advantages of the present invention will be clearer from a detailed description of embodiments of the present invention in conjunction with the drawings. It is to be noted that if not in collision, the embodiments and features therein in the present application may be combined with each other.

The steps shown in the flowcharts among the drawings may be performed by a computer system such as a group of computers capable of executing instructions. Although logical sequences are shown in the flowcharts, the shown or described steps may be performed in sequences different from those described herein in some cases.

It is to be noted that the terms "first", "second" and the like in the description, claims and drawings of the present invention are used to distinguish between similar objects and are not necessarily used to describe a particular order or sequence.

In order to select a resource that satisfies a low-latency traffic requirement, an implementation method is to limit a time domain range for a resource selection and select the resource within a small time range. However, a small resource selection range limits selection freedom of available resources and it is likely to fail to find the available resources that satisfy a latency requirement and have small interference.

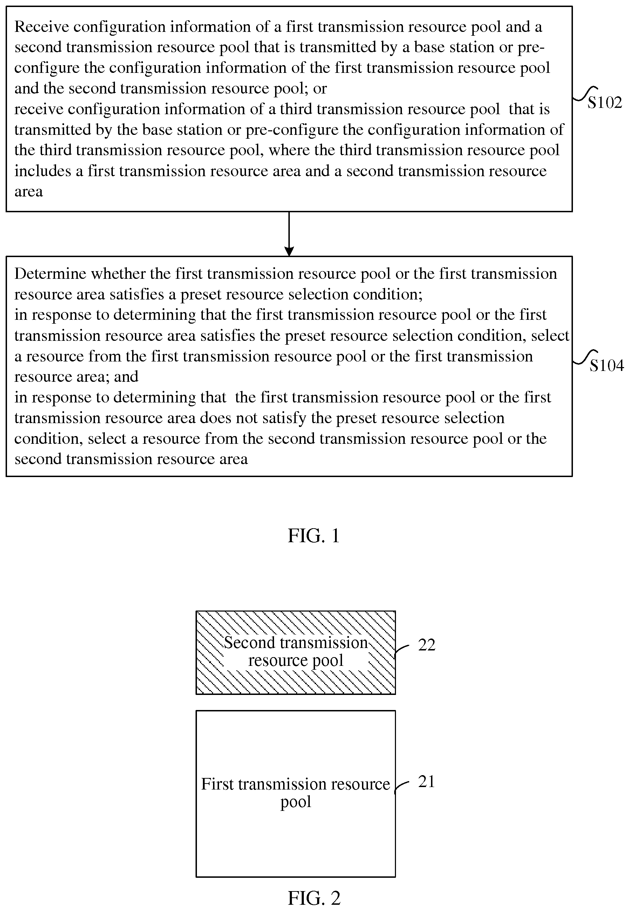

This embodiment provides a resource selection method. FIG. 1 is a flowchart of a resource selection method according to an embodiment of the present invention. As shown in FIG. 1, the method includes steps described below.

In step S102, configuration information of a first transmission resource pool and a second transmission resource pool is pre-configured or received from a base station; or configuration information of a third transmission resource pool is pre-configured or received from the base station, where the third transmission resource pool includes a first transmission resource area and a second transmission resource area.

In step S104, it is determined whether the first transmission resource pool or the first transmission resource area satisfies a preset resource selection condition; when the first transmission resource pool or the first transmission resource area satisfies the preset resource selection condition, a resource selection is performed in the first transmission resource pool or the first transmission resource area; and when the first transmission resource pool or the first transmission resource area does not satisfy the preset resource selection condition, the resource selection is performed in the second transmission resource pool or the second transmission resource area.

In the above solution, whether the first resource pool satisfies the preset resource selection condition is determined before each data transmission, whether the first resource pool satisfies the preset resource selection condition is determined at the time of a resource reselection, and/or whether the first resource pool satisfies the preset resource selection condition is determined at regular time intervals.

In this embodiment, the first transmission resource pool and the first transmission resource area may be configured for a legacy UE (a UE in other version that does not support the method of the present invention) and shared with the legacy UE. The first transmission resource pool and the first transmission resource area may be shared with a UE supporting the mode 1.

The configuration information includes at least one of: a resource pool type, a list of the first transmission resource pool, an index of the first transmission resource pool, a list of the second transmission resource pool, a resource pool usage priority, or an index of the second transmission resource pool.

Alternatively, the configuration information includes at least one of: the resource pool type, the resource pool usage priority, a frequency domain starting position or index of the second transmission resource area, a frequency domain termination position or index of the second transmission resource area, a time domain starting position or index of the second transmission resource area, a time domain termination position or index of the second transmission resource area or a bitmap of time domain positions of the second transmission resource area.

The resource pool type includes at least three types: for example, a resource pool type 1 (a first type of resource pool) is a resource pool, resources in which are scheduled and assigned by the base station, a resource pool type 2 (a second type of resource pool) is a resource pool, resources in which are autonomously selected by a UE, and a resource pool type 3 (a third type of resource pool) may serve as the resource pool, the resources in which are scheduled and assigned by the base station or the resource pool, the resources in which are autonomously selected by the UE. Of course, the resource pool type is not limited to the preceding types, and may also be any other conceivable and reasonable manner.

Each of the first transmission resource pool, the second transmission resource pool and the third transmission resource pool may be one resource pool or one group of resource pools. The first transmission resource pool, the second transmission resource pool and the third transmission resource pool may be located on a same carrier or on different carriers.

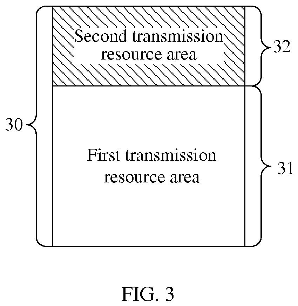

In an alternative embodiment of the present invention, two resource pool configuration schemes are separately shown in FIG. 2 and FIG. 3.

### Scheme 1

As shown in FIG. 2, the first transmission resource pool 21 and the second transmission resource pool 22 are included.

The configuration information of the first transmission resource pool 21 and the configuration information of the second transmission resource pool 22 may be carried via radio resource control (RRC) signaling, and the configuration information indicates whether the current resource pool is the second transmission resource pool. The configuration information may also include, but is not limited to, at least one of: the resource pool type, the list of the second transmission resource pool, the resource pool usage priority, the index of the second transmission resource pool, the list of the first transmission resource pool, the index of the first transmission resource pool, an energy decision threshold Th1 for available resources or a number or proportion threshold Th2 for available resources.

### Scheme 2

As shown in FIG. 3, the third transmission resource pool 30 is included, where the third transmission resource pool 30 includes a first transmission resource area 31 and a second transmission resource area 32.

The configuration information of the transmission resource pool may be carried in an RRC message, and the configuration information indicates that resources in a part of frequency domain and/or time domain range are the second transmission resource area 32, and the remaining resources are included in the first transmission resource area 31, or indicates that the resources in the part of the frequency domain and/or time domain range are the first transmission resource area 31, and the remaining resource are the second transmission resource area 32.

The RRC message may also carry the configuration information which includes, but is not limited to, at least one of: the resource pool type, the resource pool usage priority, the frequency domain starting position or index of the second transmission resource area, the frequency domain termination position or index of the second transmission resource area, the time domain starting position or index of the second transmission resource area, the time domain termination position or index of the second transmission resource area, the bitmap of time domain positions of the second transmission resource area, the energy decision threshold Th1 for available resources, or the number or proportion threshold Th2 for available resources.

The scheme 1 uses two resource pools, and time-frequency positions of resources of the resource pools may be continuous or discontinuous. That is, the first transmission resource pool is located in a time-frequency area, and the second transmission resource pool and the first transmission resource pool are spaced apart by some time-frequency resources. The second transmission resource pool and the first transmission resource pool may also be located on different carriers. The scheme 2 uses one resource pool, and time-frequency resources in the first transmission resource area 31 and time-frequency resources in the second transmission resource area are continuous.

The above Th1 or Th2 may be one value. Alternatively, the above Th1 or Th2 may be a group of values (multiple values) corresponding to channel busy ratios (CBR) or ProSe per packet priorities (PPPP). That is, one or more PPPPs or one or more CBR levels correspond to one energy decision threshold for available resources. Generally, a higher PPPP corresponds to a smaller Thlvalue, and a higher CBR corresponds to the smaller Th1 value. Generally, the higher PPPP corresponds to a smaller value Th2, and the higher CBR corresponds to the smaller Th2 value.

The available resource number threshold or proportion Th2 may be pre-configured, acquired from the base station, or determined according to a minimum number of resources required by a user equipment.

Similarly, the energy decision threshold Th1 may be pre-configured, acquired from the base station, or determined according to a requirement of the user equipment.

It should be understood that, in specific implementations, each resource pool (the first resource pool to a third resource pool) is configured with one Th1 and one Th2; alternatively, all the resource pools are configured with a same Th1 and a same Th2; alternatively, some resource pools are configured with a same Th1 and a same Th2, while each of other resource pools is configured separately; alternatively, each UE is configured with one Th1 and one Th2. In addition to the above manners, the Th1 and Th2 in this solution may be configured in any other conceivable and reasonable manner, which is not described one by one in this solution.

In an alternative embodiment of the present invention, that the first transmission resource pool or the first transmission resource area satisfies the preset resource selection condition refers to that a number of available resources in the first transmission resource pool or the first transmission resource area is greater than, or is greater than or equal to the available resource number threshold; and/or that a proportion of available resources in the first transmission resource pool or the first transmission resource area is greater than, or is greater than or equal to the available resource proportion threshold Th2.

In an alternative embodiment of the present invention, the available resources are resources in the first transmission resource pool or the first transmission resource area, each of which is unoccupied or predicted to be unoccupied after being sensed, satisfies a latency requirement, and has energy less than, or less than or equal to the energy decision threshold Th1 within a certain time domain range (such as a resource selection window). The available resources do not include a resource that is likely to be occupied or will be occupied by another UE, and/or a resource that has not been sensed by a current UE due to a half-duplex reason (whether the resource is occupied by another UE cannot be determined).

The energy decision threshold Th1 for available resources refers to a threshold for determining whether energy on a resource used by the UE for transmitting a physical sidelink share channel (PSSCH) and/or a physical sidelink control channel (PSCCH) is high or low. The energy refers to a sidelink-received signal strength indication (S-RSSI) or reference signal receiving power (RSRP) of a demodulation reference signal (DMRS) on the resource used by the UE for transmitting the PSSCH and/or the PSCCH.

The UE selects the resource that satisfies the requirement from the second transmission resource pool or the second transmission resource area under at least one of conditions described below.

The UE has data to be transmitted and needs to select the resource or reselects the resource.

The number or proportion of available resources sensed by the UE in the first transmission resource pool or the first transmission resource area is less than, or is not greater than at least the threshold Th2 for available resources.

The UE performs resource sensing on the second transmission resource pool or the second transmission resource area before the UE selects the resource.

Alternatively, after the UE selects the resource that satisfies the requirement from the second transmission resource pool or the second transmission resource area, the UE may transmit the PSSCH and/or the PSCCH on the resource. The resource may be used once or continuously used in multiple transmission periods according to a semi-persistent scheduling (SPS) process.

In another alternative embodiment of the present invention, that the first transmission resource pool or the first transmission resource area satisfies the preset resource selection condition refers to that an energy statistics value is calculated for resources in a set of available resources after the resource sensing in the first transmission resource pool or the first transmission resource area and an energy statistics result is less than, or is less than or equal to the energy decision threshold. That is, in the case of the first transmission resource pool and the second transmission resource pool (or the first transmission resource area and second transmission resource area), the energy statistics value is calculated for resources in a set of available resources in the first transmission resource pool (or the first transmission resource area), and if the energy statistics value of the first transmission resource pool (or the first transmission resource area) is less than, or is less than or equal to the energy decision threshold of the first transmission resource pool (or the first transmission resource area), the first transmission resource pool (or the first transmission resource area) is used for the data transmission. Otherwise, the second transmission resource pool (or the second transmission resource area) is used for the data transmission.

In another alternative embodiment of the present invention, that the first transmission resource pool or the first transmission resource area satisfies the preset resource selection condition refers to that in the first transmission resource pool or the first transmission resource area, the energy statistics result obtained by performing energy statistics on the set of available resources in the first transmission resource pool/the first transmission resource area is less than an energy statistics result obtained by performing the energy statistics on a set of available resources in the second transmission resource pool/the second transmission resource area.

That is, for both the transmission resource pools (the first transmission resource pool and the second transmission resource pool)/resource areas (the first transmission resource area and the second transmission resource area), the energy statistics results obtained by performing the energy statistics on the set of available resources in each transmission resource pool/resource area are compared and a transmission resource pool/resource area with a smaller energy statistics result is selected for the data transmission.

Vehicle-to-everything (V2X) communications are used as an example and the resource selection method described above is further described through several preferred embodiments.

### Embodiment 1

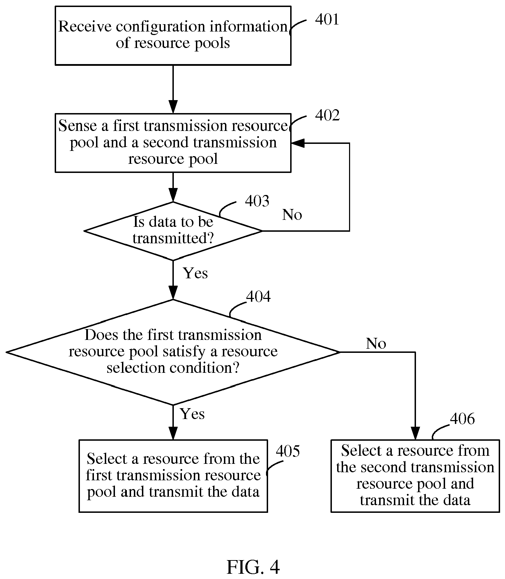

This embodiment provides a resource selection method for a UE supporting the mode 2. A basic process is shown in FIG. 4 and includes detailed steps described below.

In step 401, configuration information of resource pools is received from a base station, where a resource pool scheme is the scheme 1 shown in FIG. 2. A first transmission resource pool and the second transmission resource pool are located on different carriers. The usage priority of the first transmission resource pool is higher than that of the second transmission resource pool.

Other parameters configured by the base station may also be received, where the parameters include, but are not limited to, an energy decision threshold Th1 for available resources, an available resource number threshold or proportion Th2, and a resource selection window.

In step 402, the UE senses the first transmission resource pool and/or the second transmission resource pool, and counts available resources that satisfy a latency requirement.

One statistical method is to receive or monitor PSCCHs and PSSCHs on all resources within a certain time range in a resource pool to be sensed, measure energy on the resource or energy of the pilot signal, predict a resource usage situation within the resource selection window according a signal period, the size of the occupied resource, a priority and other features, and exclude a resource that is likely to be occupied by another UE and/or has not been sensed due to a half-duplex reason. The excluded resource includes, but is not limited to, a resource position at which scheduling assignment (SA)/sidelink control information (SCI) of control signaling indicating a PSSCH for a current data transmission and data are correctly received, a resource that is not correctly received and has energy greater than, or greater than or equal to the energy decision threshold Th1 of available resources, a resource that cannot be sensed because data is currently transmitted on the resource, or another resource that is likely to conflict with a resource used by another UE.

Among the remaining resources where the above resources are excluded, a number or proportion of resources that satisfy the latency requirement and have energy less than, or less than or equal to the energy decision threshold Th1 of available resources is counted.

In step 403, if data is to be transmitted, step 404 is performed, and otherwise, step 402 is performed.

In step 404, it is determined whether the first transmission resource pool satisfies a resource selection condition, and if yes, step 405 is performed; otherwise, step 406 is performed.

A determining method is to compare the proportion or number of available resources within the resource selection window and the proportion threshold or number threshold Th2, determine that the first transmission resource pool satisfies the resource selection condition if the proportion or number of available resources is greater than, or greater than or equal to the threshold Th2, and otherwise, determine that the first transmission resource pool does not satisfy the resource selection condition. The threshold Th2 may be a value corresponding to the resource pool, a value independent of the resource pool, a group of values corresponding to ProSe per packet priorities (a higher priority corresponds to a larger Th2) or a group of value corresponding to resource occupation rate of the resource pool (a higher resource occupation rate corresponds to the larger threshold). Here, since a channel may be regarded as a kind of resource, that a higher CBR corresponds to a larger T2 value may be regarded as a specific implementation for that the higher resource occupation rate corresponds to the larger threshold.

In the preceding scheme, that the threshold Th2 may be the value corresponding to the resource pool or the value independent of the resource pool may be understood as follows: each resource pool (a first resource pool to a third resource pool) is configured with one Th2; or all the resource pools are configured with a same Th2; or some resource pools are configured with the same Th2, while other resource pools are configured are configured separately, or the like.

In step 405, a resource is selected from the first transmission resource pool and the data is transmitted, and the process ends.

In step 406, a resource is selected from the second transmission resource pool and the data is transmitted, and the process ends.

For example, assuming that the number threshold Th2 is 20 and the number of available resources within the resource selection window is 30, the number 30 of the available resources sensed within the resource selection window is greater than the number threshold 20, and the first transmission resource pool is used for transmitting the data.

Assuming that the proportion threshold Th2 is 20% and a total number of resources is 100, the number threshold is calculated as 100^{∗}20%=20 and compared with the number 30 of the available resources, the number of the practically sensed available resources is greater than the threshold, and the first resource pool is used for transmitting the data.

Assuming that the proportion threshold Th2 of idle resources is 20%, the practical number is 30 and the total number of resources is 100, the practical proportion of available resources sensed is 30% and compared with the proportion threshold Th2, a practical number proportion is greater than the proportion threshold, and the first resource pool is used for transmitting the data.

If the UE transmits SPS traffic, the UE may continuously occupy the selected resource to transmit the data until the next resource reselection. However, if the second transmission resource pool or a second transmission resource area is currently used, step 404 may be performed before each data transmission to monitor whether the first transmission resource pool satisfies the resource selection condition. If the resource selection condition is satisfied, the resource is reselected from the first transmission resource pool and the subsequent data transmission is performed.

The UE supporting the mode 2 may share the first transmission resource pool with a legacy UE and/or a UE supporting the mode 1.

In this embodiment, when the UE fails to obtain a resource that satisfies the resource selection condition from the first transmission resource pool, the UE selects/reselects the resource from the second transmission resource pool through the resource selection process described above to obtain an available resource that satisfies the latency requirement, ensuring transmissions of low-latency traffic.

### Embodiment 2

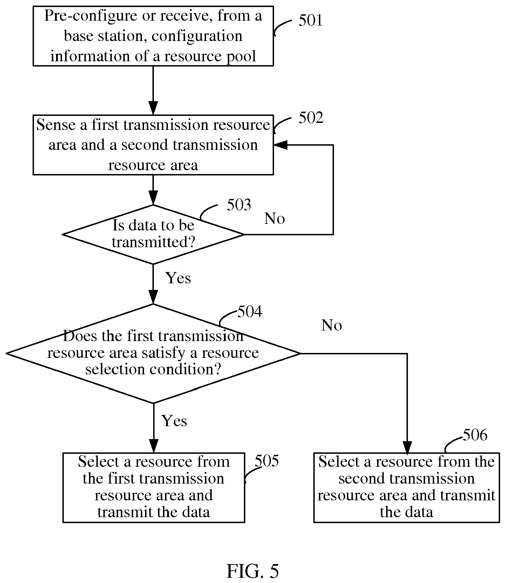

This embodiment provides a resource selection method. As shown in FIG. 5, the method includes steps described below.

In step 501, configuration information of a resource pool is pre-configured or received from a base station, where the scheme 2 shown in FIG. 3 is used. Other parameters configured by the base station may also be received, where the parameters include, but are not limited to, an energy decision threshold Th1 of available resources, an available resource number threshold or proportion Th2, and a resource selection window.

In step 502, available resources that satisfy a latency requirement are sensed in a first transmission resource area and/or a second transmission resource area.

In step 503, if there is data to be transmitted, step 504 is performed, and otherwise, step 502 is performed.

In step 504, it is determined whether the first transmission resource area satisfies a resource selection condition, and if yes, step 505 is performed; otherwise, step 506 is performed.

A determining method is to compare a proportion or number of available resources within the resource selection window and the proportion threshold or number threshold Th2. It is determined that the first transmission resource area satisfies the resource selection condition in response to determining that the proportion or number of available resources is greater than, or greater than or equal to the proportion threshold or number threshold Th2, and otherwise, it is determined that the first transmission resource area does not satisfy the resource selection condition.

In step 505, a resource is selected from the first transmission resource area and the data is transmitted, and the process ends.

In step 506, a resource is selected from the second transmission resource area and the data is transmitted, and the process ends.

If a UE transmits SPS traffic, the UE may continuously occupy the selected resource for data transmission until the next resource reselection. However, if the second transmission resource area is currently used, step 504 may be performed before each data transmission to monitor whether the first transmission resource area satisfies the resource selection condition. If the resource selection condition is satisfied, the resource may be reselected from the first transmission resource area and the subsequent data transmission is performed.

The first transmission resource area may be configured as a transmission resource pool of a UE supporting the mode 2 and the legacy UE, and is shared by the UE supporting the mode 2 and the legacy UE or shared by the UE supporting the mode 2 and a UE supporting the mode 1.

In this embodiment, when the UE fails to obtain an available resource from the first transmission resource area, the UE may select a resource from the second transmission resource area through the resource selection process described above to obtain an available resource that satisfies the latency requirement, ensuring transmissions of low-latency traffic.

### Embodiment 3

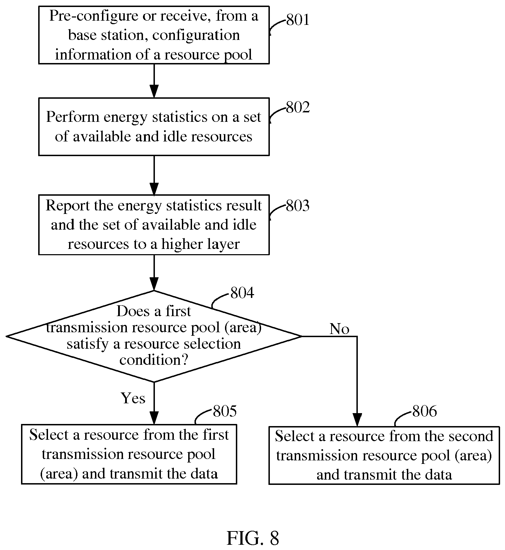

This embodiment provides a resource selection method. As shown in FIG. 8, the method includes steps described below.

In step 801, a UE pre-configures or receives, from a base station, configuration information of one or more transmission resource pools. As shown in FIG. 2, the UE pre-configures or receives configuration information of two transmission resource pools, the two transmission resource pools include a first transmission resource pool and a second transmission resource pool.

In step 802, the UE senses, in the first transmission resource pool and/or the second transmission resource pool, available resources that satisfy a latency requirement , takes the available resources as a set of available resources of the corresponding resource pool, and performs energy statistics on the set of available resources of each transmission resource pool to obtain an energy statistics result of each transmission resource pool.

Here, for each transmission resource pool, an available resource set is obtained. This is mainly because the (available) idle resources in each transmission resource pool may be discontinuous, for example, idle resources with discontinuous frequency domain and/or time domain positions. If the transmission resource pool includes discontinuous idle resources, all the discontinuous idle resources may be aggregated to form the set of available resources. If the transmission resource pool does not include the discontinuous idle resources, that is, includes continuous idle resources, the continuous idle resources are not necessarily regarded as the set of available resources and may only be regarded as a section of continuous available resources.

The available resources are a certain number of resources each of which is unoccupied or projected to be unoccupied after being sensed and satisfies the latency requirement within a certain time domain range in each transmission resource pool. The certain number is a number predefined, pre-configured or configured by a system, or a number ratio predefined, pre-configured or configured by the system, where the number ratio refers to a ratio of the set of available resources in each transmission resource pool to a total number of resources in the corresponding transmission resource pool.

In step 803, the set of available resources and the energy statistics result are reported to a higher layer of the user equipment.

Here, as is known to those skilled in the art, an International Organization for Standardization (ISO) defines an open system interconnection (OSI) model. The OSI model divides network communications into seven layers, which sequentially include a physical layer, a data link layer, a network layer, a transport layer, a session layer, a presentation layer and an application layer from the bottom. The concept of the higher layer is relative. For example, a media access control (MAC) layer belongs to the data link layer in the OSI model, and the layers above the MAC layer are generally regarded as the higher layers. The higher layers may also refer to three layers, the session layer, the presentation layer and the application layer. The higher layers may also refer to layers other than the physical layer among the seven layers. Of course, the concept of the higher layer may also include any other conceivable and reasonable manner, which is not specifically limited herein. A specific meaning of the higher layer is determined according to a practical application scenario.

In step 804, when the higher layer of the UE performs a resource selection, the corresponding resource pool is selected according to a determining result under a preset resource selection condition.

If the transmission resource pool that satisfies the preset resource selection condition determined as the first transmission resource pool, step 805 is performed.

Otherwise, step 806 is performed.

The preset resource selection condition is as follows: for one of the first transmission resource pool and the second transmission resource pool, for example, the first transmission resource pool, the energy statistics result of the transmission resource pool obtained by performing energy statistics on a set of idle resources is compared with an energy decision threshold Th1 pre-configured/predefined for the resource pool, and the transmission resource pool (the first transmission resource pool) is selected when it is determined that the energy statistics result obtained by performing the energy statistics on the set of idle resources is less than, or less than or equal to the energy decision threshold Th1. Otherwise, other transmission resource pools are continued to be determined or an abnormal resource pool is selected.

Another preset resource selection condition is to: for all transmission resource pools, compare their energy statistics results obtained by performing the energy statistics on the set of available resource and select a transmission resource pool with the smaller energy statistics result.

The energy statistics result includes statistical data of a maximum value, an average value or a variance of energy values of all resource units in the set of available resources. The energy value may be one of: sidelink received signal strength indicator (S-RSSI) of each resource unit, PSSCH reference signal received power (PSSCH-RSRP) or PSCCH reference signal received power (PSCCH-RSRP).

In step 805, a resource is selected from the first transmission resource pool and data is transmitted, and the process ends.

In step 806, a resource is selected from the second transmission resource pool and the data is transmitted, and the process ends.

It is to be noted that in this embodiment, the first transmission resource pool and the second transmission resource pool are used as an example for description. For resources in a first transmission resource area and a second transmission resource area of a third transmission resource pool, an implementation process is similar to the preceding solution and will not be described again here.

In this embodiment, when the UE fails to obtain an available resource from the first transmission resource pool/area, the UE may select the resource from the second transmission resource pool/area through the resource selection process described above and transmit the data, so that the UE can obtain the available resource that satisfies the latency requirement, ensuring transmissions of low-latency traffic.

### Embodiment 4

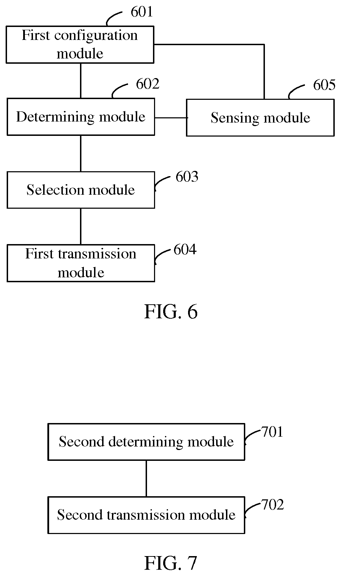

This embodiment provides a resource selection apparatus which may be disposed in a user equipment. As shown in FIG. 6, the resource selection apparatus includes a first configuration module 601, a determining module 602, a selection module 603 and a first transmission module 604.

The first configuration module 601 is configured to pre-configure or receive, from a base station, configuration information of a first transmission resource pool and a second transmission resource pool; or pre-configure or receive, from the base station, configuration information of a third transmission resource pool including a first transmission resource area and a second transmission resource area.

The determining module 602 is configured to determine whether the first transmission resource pool or the first transmission resource area satisfies a preset resource selection condition.

The selection module 603 is configured to: when the determining module determines whether the first transmission resource pool or the first transmission resource area satisfies the preset resource selection condition, select a resource from the first transmission resource pool or the first transmission resource area, otherwise select a resource from the second transmission resource pool or the second transmission resource area.

The first transmission module 604 is configured to transmit a signal using the resource selected by the selection module.

In an alternative embodiment of the present invention, the resource selection apparatus further includes a sensing module 605. The sending module 605 is configured to sense resources in the first transmission resource pool or the first transmission resource area and determine available resources, where the available resources are resources in the first transmission resource pool or the first transmission resource area, each of which is unoccupied or predicted to be unoccupied according to the resource sensing, satisfies a latency requirement, and has energy less than, or less than or equal to an energy decision threshold within a certain time domain range.

In an alternative embodiment of the present invention, the first configuration module 601 is further configured to: acquire an available resource number threshold or available resource proportion threshold from the base station, pre-configure the available resource number threshold or available resource proportion threshold, or determine the available resource number threshold or available resource proportion threshold according to a minimum number of resources required by the user equipment; and acquire, from the base station, the energy decision threshold.

In a case where the first transmission module 604 transmits the signal using the resource selected by the selection module 603 from the second transmission resource pool or the second transmission resource area, the determining module 602 is triggered to determine whether the first transmission resource pool satisfies a resource selection condition before each data transmission; and when the determining module 602 determines that the first transmission resource pool satisfies the resource selection condition, the selection module 603 selects the resource from the first transmission resource pool and accordingly the first transmission module 604 performs the data transmission.

In practice applications, the first configuration module 601, the determining module 602, the selection module 603 and the first transmission module 604 each may be implemented by a central processing unit (CPU), a digital signal processor (DSP), a micro processor unit (MPU) or a field programmable gate array (FPGA).

### Embodiment 5

This embodiment provides a resource configuration method which is applied to a base station. The method includes steps described below.

A first transmission resource pool and a second transmission resource pool are determined; or a third transmission resource pool is determined, where the third transmission resource pool includes a first transmission resource area and a second transmission resource area.

Configuration information of the first transmission resource pool and the second transmission resource pool or configuration information of the third transmission resource pool is transmitted to a user equipment.

In the preceding solution, the base station senses resources capable of being used as a resource pool, such as unoccupied resource blocks (RB), sub-channels, resource elements (RE) and/or RE group, and selects part of the resources as the first transmission resource pool and part of the resources as the second transmission resource pool, or selects at least part of the resources as a third resource pool according to practical usage requirements. For example, resource blocks with resource block numbers 0A-0F are selected as the first transmission resource pool, resource blocks with resource block number 1A-1F are selected as the second transmission resource pool, and resource block with resource block numbers 1A-8F are selected as the third. transmission resource pool. An attribute such as a length and a type of each resource pool may be determined according to the practical usage requirements.

A specific process for determining the first, second and third transmission resource pools is referred to an existing related description and is not specifically limited in this solution.

In an alternative embodiment of the present invention, the method further includes transmitting at least one of the available resource number threshold, the available resource proportion threshold or the energy decision threshold to the user equipment.

The preceding embodiment describes that the first, second and third resource pools are determined by the base station and transmitted to the user equipment for the user equipment to select the resource. In addition, the first, second and third resource pools may also be pre-configured by the user equipment. A pre-configuration process is similar to the preceding determining process of the base station and will not be specifically described.

### Embodiment 6

This embodiment provides a resource configuration apparatus. As shown in FIG. 7, the resource configuration apparatus includes a second determining module 701 and a second transmission module 702.

The second determining module 701 is configured to determine a first transmission resource pool and a second transmission resource pool; or determine a third transmission resource pool, where the third transmission resource pool includes a first transmission resource area and a second transmission resource area.

The second transmission module 702 is configured to transmit configuration information of the first transmission resource pool and the second transmission resource pool or configuration information of the third transmission resource pool to a UE.

In an alternative embodiment of the present invention, the second determining module 701 is further configured to determine at least one of an available resource number threshold, an available resource proportion threshold, or an energy decision threshold.

The second transmission module 702 is further configured to transmit at least one of the available resource number threshold, the available resource proportion threshold, or the energy decision threshold to the UE.

In practical applications, the second determining module 701 and the second transmission module 702 each may be implemented by a CPU, a DSP, an MPU or an FPGA.

### Embodiment 7

This embodiment provides a resource selection apparatus, including a memory and a processor, where the memory stores a program which, when read and executed by the processor, causes the processor to perform operations described below.

Configuration information of a first transmission resource pool and a second transmission resource pool is pre-configured or received from a base station; or configuration information of a third transmission resource pool is pre-configured or received from the base station, where the third transmission resource pool includes a first transmission resource area and a second transmission resource area.

When the first transmission resource pool or the first transmission resource area satisfies a preset resource selection condition, a resource is selected from the first transmission resource pool or the first transmission resource area for a transmission, otherwise a resource is selected from the second transmission resource pool or the second transmission resource area for the transmission.

In an embodiment, the program, when read and executed by the processor, causes the processor to perform an operation described below.

That the first transmission resource pool or the first transmission resource area satisfies the preset resource selection condition refers to that a number or proportion of available resources in the first transmission resource pool or the first transmission resource area is greater than, or is greater than or equal to an available resource number threshold or available resource proportion threshold.

In an embodiment, the program, when read and executed by the processor, causes the processor to perform an operation described below.

The available resources are resources in the first transmission resource pool or the first transmission resource area, each of which is unoccupied or predicted to be unoccupied after being sensed, satisfies a latency requirement, and has energy less than, or less than or equal to an energy decision threshold within a certain time domain range.

In an embodiment, the energy decision threshold includes one energy decision threshold value or a plurality of energy decision threshold values corresponding to ProSe per packet priorities or channel busy ratios.

In an embodiment, the program, when read and executed by the processor, causes the processor to: acquire the available resource number threshold or available resource proportion threshold from the base station, pre-configure the available resource number threshold or available resource proportion threshold, or determine the available resource number threshold or available resource proportion threshold according to a minimum number of resources required by a user equipment; and pre-configure the energy decision threshold, acquire, from the base station, the energy decision threshold, or determine the energy decision threshold according to a requirement of the user equipment.

In an embodiment, the program, when read and executed by the processor, causes the processor to perform an operation described below.

Whether a first resource pool satisfies the preset resource selection condition is determined in at least one of the following cases: before each data transmission; at the time of a resource reselection; or at regular time intervals.

In an embodiment, the program, when read and executed by the processor, causes the processor to perform operations described below.

In a case of selecting the resource from the second transmission resource pool or the second transmission resource area for the transmission, whether the first transmission resource pool satisfies a resource selection condition is determined before each data transmission; and when it is determined that the first transmission resource pool satisfies the resource selection condition, the resource is selected from the first transmission resource pool for the data transmission.

Another embodiment of the present invention further provides a user equipment including the resource selection apparatus described above.

Another embodiment of the present invention further provides a computer storage medium such as the preceding memory, which is configured to store a program which, when executed, is used for executing the resource selection method described above.

### Embodiment 8

This embodiment provides a resource configuration apparatus, including a memory and a processor, where the memory stores a program which, when read and executed by the processor, causes the processor to perform operations described below.

A first transmission resource pool and a second transmission resource pool are determined; or a third transmission resource pool is determined, where the third transmission resource pool includes a first transmission resource area and a second transmission resource area.

Configuration information of the first transmission resource pool and the second transmission resource pool or configuration information of the third transmission resource pool is transmitted to a user equipment.

Another embodiment of the present invention further provides a base station including the resource configuration apparatus described in the embodiment 8.

Another embodiment of the present invention further provides a computer storage medium such as the preceding memory, which is configured to store a program which, when executed, is used for executing the resource configuration method described above.

It is to be noted that a principle for solving problems of the resource selection apparatus provided by the embodiments of the present invention is similar to the resource selection method; therefore, an implementation process and implementation principles of the resource selection apparatus may refer to a description of an implementation process and implementation principles of the resource selection method and are not repeated herein. Similarly, an implementation process and implementation principles of the resource configuration apparatus may refer to a description of an implementation process and implementation principles of the resource configuration method and are not repeated herein.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above-mentioned modules or apparatuses may be stored in a computer-readable storage medium if implemented in the form of a software functional unit and sold or used as an independent product. Based on this understanding, the solutions provided by the present invention substantially, or the part contributing to the existing art, may be embodied in the form of a software product. The computer software product is stored in a storage medium and includes several instructions for enabling a computer device (which may be a personal computer, a server, a network device or the like) to execute all or part of the steps in the methods provided by the embodiments of the present invention. The preceding storage medium includes a USB flash drive, a read-only memory (ROM), a random access memory (RAM), a mobile hard disk, a magnetic disk, an optical disk or another medium capable of storing program codes.

Although the embodiments disclosed by the present invention are as described above, the content thereof is merely embodiments for facilitating the understanding of the present invention and is not intended to limit the present invention. Those skilled in the art to which the present invention pertains may make any modifications and changes on implementation forms and details without departing from the spirit and scope disclosed by the present invention, but the protection scope of the present invention is still subject to the scope defined by the appended claims.

It should be understood by those skilled in the art that the embodiments of the present invention may be provided as methods, systems or computer program products. Therefore, the present invention may adopt a form of a hardware embodiment, a software embodiment or a combination of hardware and software embodiments. In addition, the present invention may adopt a form of a computer program product implemented on one or more computer-usable storage media (including, but not limited to, a disk memory, an optical memory and the like) which include computer-usable program codes.

The present invention is described with reference to flowcharts and/or block diagrams of methods, devices (systems) and computer program products according to the embodiments of the present invention. It is to be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by the computer or the processor of another programmable data processing device produce the apparatus for implementing functions designated in one or more flows in the flowcharts and/or one or more blocks in the block diagrams.

These computer program instructions may also be stored in a computer-readable memory which can cause the computer or another programmable data processing device to operate in a particular manner so that the instructions stored in the computer-readable memory produce a manufactured product including an instructing apparatus. The instructing apparatus implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

The above are only preferred embodiments of the present invention and are not intended to limit the scope of the present invention.

### INDUSTRIAL APPLICABILITY

In the embodiments of the present invention, when the available resource that satisfies the latency requirement cannot be selected from the first transmission resource pool or the first transmission resource area, the second transmission resource pool or the second transmission resource area may be pre-configured or configured and the available resource may be selected from the second transmission resource pool or the second transmission resource area, thereby improving resource selection freedom and ensuring reliable transmissions of the low-latency traffic. The present invention solves the problem that in order to support the low-latency traffic, the UE cannot select an available resource that satisfies a requirement within a short resource selection window.

## Claims

1. A resource selection method, comprising:
pre-configuring or receiving, from a base station, configuration information of a first transmission resource pool and a second transmission resource pool; or pre-configuring or receiving, from the base station, configuration information of a third transmission resource pool comprising a first transmission resource area and a second transmission resource area; and
when the first transmission resource pool or the first transmission resource area satisfies a preset resource selection condition, selecting a resource from the first transmission resource pool or the first transmission resource area for a transmission, otherwise selecting a resource from the second transmission resource pool or the second transmission resource area for the transmission.

2. The method of claim 1, wherein
that the first transmission resource pool or the first transmission resource area satisfies the preset resource selection condition refers to: that a number of available resources in the first transmission resource pool or the first transmission resource area is greater than, or is greater than or equal to an available resource number threshold; or
that a proportion of available resources in the first transmission resource pool or the first transmission resource area is greater than, or is greater than or equal to an available resource proportion threshold.

3. The method of claim 2, wherein the available resources are resources in the first transmission resource pool or the first transmission resource area, each of which satisfies a latency requirement and has energy less than, or less than or equal to an energy decision threshold within a certain time domain range.

4. The method of claim 3, wherein the energy decision threshold comprises one energy decision threshold value or a plurality of energy decision threshold values corresponding to ProSe per packet priorities or channel busy ratios.

5. The method of claim 3, wherein
the available resource number threshold or available resource proportion threshold is pre-configured, acquired from the base station, or determined according to a minimum number of resources required by a user equipment; and
the energy decision threshold is pre-configured, acquired from the base station, or determined according to a requirement of the user equipment.

6. The method of any one of claims 1 to 5, wherein the first transmission resource pool, the second transmission resource pool, and the third transmission resource pool comprising the first transmission resource area and the second transmission resource area are located on a same carrier or on different carriers.

7. The method of claim 1, wherein whether the first resource pool satisfies the preset resource selection condition is determined in at least one of the following cases:
before each data transmission;
at the time of a resource reselection; or
at regular time intervals.

8. The method of claim 1, wherein in the case of selecting the resource from the second transmission resource pool or the second transmission resource area for the transmission,
whether the first transmission resource pool satisfies the resource selection condition is determined before each data transmission; and
in response to determining that the first transmission resource pool satisfies the resource selection condition, the resource is selected from the first transmission resource pool for the data transmission.

9. A resource selection apparatus, comprising:
a first configuration module, configured to pre-configure or receive, from a base station, configuration information of a first transmission resource pool and a second transmission resource pool; or pre-configure or receive, from the base station, configuration information of a third transmission resource pool comprising a first transmission resource area and a second transmission resource area;
a determining module, configured to determine whether the first transmission resource pool or the first transmission resource area satisfies a preset resource selection condition;
a selection module, configured to: when the determining module determines that the first transmission resource pool or the first transmission resource area satisfies the preset resource selection condition, select a resource from the first transmission resource pool or the first transmission resource area, otherwise select a resource from the second transmission resource pool or the second transmission resource area; and
a first transmission module, configured to transmit a signal using the resource selected by the selection module.

10. The apparatus of claim 9, wherein the determining module is further configured to determine whether the first transmission resource pool or the first transmission resource area satisfies the preset resource selection condition in the following manner:
determining that the first transmission resource pool or the first transmission resource area satisfies the preset resource selection condition when a number of available resources in the first transmission resource pool or the first transmission resource area is greater than, or is greater than or equal to an available resources number threshold; or
determining that the first transmission resource pool or the first transmission resource area satisfies the preset resource selection condition when a proportion of available resources in the first transmission resource pool or the first transmission resource area is greater than, or is greater than or equal to an available resources proportion threshold.

11. The apparatus of claim 10, further comprising a sensing module, configured to sense resources in the first transmission resource pool or the first transmission resource area and determine the available resources;
wherein the available resources are resources in the first transmission resource pool or the first transmission resource area, each of which is unoccupied or predicted to be unoccupied according to the resource sensing, satisfies a latency requirement, and has energy less than, or less than or equal to an energy decision threshold within a certain time domain range.

12. The apparatus of claim 11, wherein the energy decision threshold comprises one energy decision threshold value or a plurality of energy decision threshold values corresponding to ProSe per packet priorities or channel busy ratios.

13. The apparatus of claim 11, wherein the first configuration module is further configured to:
acquire, from the base station, the available resources number threshold or available resources proportion threshold; pre-configure the available resources number threshold or available resources proportion threshold; or determine the available resources number threshold or available resources proportion threshold according to a minimum number of resources required by a user equipment; and
pre-configure the energy decision threshold; acquire, from the base station, the energy decision threshold; or determine the energy decision threshold according to a requirement of the user equipment.

14. The apparatus of any one of claims 9 to 13, wherein the first transmission resource pool, the second transmission resource pool, and the third transmission resource pool comprising the first transmission resource area and the second transmission resource area are located on a same carrier or on different carriers.

15. The apparatus of claim 9, wherein the determining module is configured to determine whether a first resource pool satisfies the preset resource selection condition in at least one of the following cases:
before each data transmission;
at the time of a resource reselection; or
at regular time intervals.

16. The apparatus of claim 9, wherein in the case where the first transmission module transmits the signal using the resource selected by the selection module from the second transmission resource pool or the second transmission resource area,
the determining module is triggered to determine whether the first transmission resource pool satisfies the resource selection condition before each data transmission; and
when the determining module determines that the first transmission resource pool satisfies the resource selection condition, the selection module selects the resource from the first transmission resource pool and the first transmission module performs the data transmission.

17. A resource selection apparatus, comprising a memory and a processor, wherein the memory stores a program which, when read and executed by the processor, causes the processor to:
pre-configure or receive, from a base station, configuration information of a first transmission resource pool and a second transmission resource pool; or pre-configure or receive, from the base station, configuration information of a third transmission resource pool comprising a first transmission resource area and a second transmission resource area; and
when the first transmission resource pool or the first transmission resource area satisfies a preset resource selection condition, select a resource from the first transmission resource pool or the first transmission resource area for a transmission, otherwise select a resource from the second transmission resource pool or the second transmission resource area for the transmission.

18. The apparatus of claim 17, wherein that the first transmission resource pool or the first transmission resource area satisfies the preset resource selection condition refers to that a number of available resources in the first transmission resource pool or the first transmission resource area is greater than, or is greater than or equal to an available resources number threshold; or a proportion of the available resources in the first transmission resource pool or the first transmission resource area is greater than, or is greater than or equal to an available resources proportion threshold.

19. The apparatus of claim 18, wherein the available resources are resources in the first transmission resource pool or the first transmission resource area, each of which is unoccupied or predicted to be unoccupied according to the resource sensing, satisfies a latency requirement, and has energy less than, or less than or equal to an energy decision threshold within a certain time domain range.

20. The apparatus of claim 19, wherein the energy decision threshold comprises one energy decision threshold value or a plurality of energy decision threshold values corresponding to ProSe per packet priorities or channel busy ratios.

21. The apparatus of claim 19, wherein the program, when read and executed by the processor, further causes the processor to:
acquire, from the base station, the available resources number threshold or available resources proportion threshold; pre-configure the available resources number threshold or available resources proportion threshold; or determine the available resources number threshold or available resources proportion threshold according to a minimum number of resources required by a user equipment; and
pre-configure the energy decision threshold; acquire, from the base station, the energy decision threshold; or determine the energy decision threshold according to a requirement of the user equipment.

22. The apparatus of claim 17, wherein the program, when read and executed by the processor, further causes the processor to:
determine whether the first resource pool satisfies the preset resource selection condition in at least one of the following cases:
before each data transmission;
at the time of a resource reselection; or
at regular time intervals.

23. The apparatus of claim 17, wherein the program, when read and executed by the processor, further causes the processor to:
in the case of selecting the resource from the second transmission resource pool or the second transmission resource area for the transmission,
determine whether the first transmission resource pool satisfies a resource selection condition before each data transmission; and
in response to determining that the first transmission resource pool satisfies the resource selection condition, select the resource from the first transmission resource pool for the data transmission.

24. A resource configuration method, comprising:
determining a first transmission resource pool and a second transmission resource pool; or determining a third transmission resource pool, wherein the third transmission resource pool comprises a first transmission resource area and a second transmission resource area; and
transmitting configuration information of the first transmission resource pool and the second transmission resource pool or configuration information of the third transmission resource pool to a user equipment.

25. The method of claim 24, further comprising: transmitting at least one of: an available resources number threshold, an available resources proportion threshold, or an energy decision threshold to the user equipment.

26. A resource configuration apparatus, comprising:
a second determining module, configured to determine a first transmission resource pool and a second transmission resource pool; or determine a third transmission resource pool, wherein the third transmission resource pool comprises a first transmission resource area and a second transmission resource area; and
a second transmission module, configured to transmit configuration information of the first transmission resource pool and the second transmission resource pool or configuration information of the third transmission resource pool to a user equipment.

27. The apparatus of claim 26, wherein
the second determining module is further configured to determine at least one of: an available resources number threshold, available resources proportion threshold, or an energy decision threshold; and
the second transmission module is further configured to transmit at least one of: the available resources number threshold, the available resources proportion threshold, or the energy decision threshold to the user equipment.

28. A resource configuration apparatus, comprising a memory and a processor, wherein the memory stores a program which, when read and executed by the processor, causes the processor to:
determine a first transmission resource pool and a second transmission resource pool; or determine a third transmission resource pool, wherein the third transmission resource pool comprises a first transmission resource area and a second transmission resource area; and
transmit configuration information of the first transmission resource pool and the second transmission resource pool or configuration information of the third transmission resource pool to a user equipment.

29. The apparatus of claim 28, wherein the program, when read and executed by the processor, further causes the processor to: transmit at least one of: an available resources number threshold, an available resources proportion threshold, or an energy decision threshold to the user equipment.

30. A computer storage medium, which is configured to store a program which, when executed, is used for executing the resource selection method of any one of claims 1 to 8.

31. A computer storage medium, which is configured to store a program which, when executed, is used for executing the resource configuration method of claim 24 or 25.
